# EUROPEAN PATENT APPLICATION

(11) **EP 4 718 650 A1**
(43) Date of publication of application: **01.04.2026**
(21) Application number: 24203230.8
(22) Date of filing: 27.09.2024
(51) Int. Cl.: H02G 1/14, H02G 15/08, H02G 15/18, H02G 15/105

(54) **MODULE HAVING A JOINT REGION AND METHOD FOR PRODUCING A MODULE HAVING A JOINT REGION**

(71) Applicant: Hitachi Energy Ltd, 8050 Zürich (CH)
(72) Inventor: Schiessling, Joachim, 74942 Enköping (SE); Sjoberg, Peter, 77143 Ludvika (SE); Forssen, Cecilia, 72460 Västerås (SE)
(74) Representative: Epping - Hermann - Fischer

(57) **Abstract**

A module (10) is provided which comprises a first module part (1) comprising a first electrical conductor (11), first foils (12) and first isolating structures (13) alternated with the first foils (12). The module (10) further comprises a second module part (2) comprising a second electrical conductor (21), second foils (22) and second isolating structures (23) alternated with the second foils (22). The module (10) further comprises a joint region (3) which includes a conductor connector (31), connecting structures (32) and an insulation material (33). The first module part (1) and the second module part (2) are joined together in the joint region (3). The conductor connector (31) mechanically and electrically connects the first electrical conductor (11) to the second electrical conductor (21). Each one of the connecting structures (32) electrically connects one of first foils (12) to one of the second foils (12). The joint region (3) is filled with the insulation material (33) for electrically isolating at least the conductor connector (31) and the connecting structures (32) from each other.

Moreover, a method for producing such a module (10) is provided.

## Description

The present disclosure relates to a module comprising a joint region and a method for producing a module having a joint region.

One challenge of joining two separate module parts, for instance two electrical devices, for creating one single module is how to ensure the dielectric integrity of a joint region. Another challenge is how to maintain a desired capacitive field grading and/or resistive field grading despite the presence of such joint region.

This disclosure discusses solutions for realizing sufficient insulating properties of the joint region, which may comprise insulating solid, gaseous, viscous and/or fluid materials, and at the same time for maintaining a desired capacitive field grading and/or resistive field grading.

Embodiments of the disclosure, for instance as claimed in the independent claims, address the above shortcomings in the art in whole or in part. Further embodiments of the module as well as of the method for producing a module are subject-matter of the further claims.

According to an embodiment of a module, it comprises a first module part, a second module part and a joint region. The first module part comprises a first electrical conductor, first foils and first isolating structures alternated with the first foils. The second module part comprises a second electrical conductor, second foils and second isolating structures alternated with the second foils. The joint region comprises connecting structures and an insulation material. The first module part and the second module part are joined together in the joint region, wherein the first electrical conductor is electrically connected to the second electrical conductor. Each one of the connecting structures electrically connects one of first foils to one of the second foils. The joint region is filled with the insulation material for electrically isolating at least the connecting structures from each other. It is also possible that the insulation material is configured to electrically isolate the connecting structures from the first and second electrical conductors. For example, the insulation material is configured to electrically isolate all different conductive parts in the joint region from each other: for instance the conductors, possible conductor connector, the connecting structures or electrically conductive foils from each other.

The connecting structure/s can be tube-like structure/s, net/s, strand/s, web/s or wire/s. The connecting structure can be a perforated tube-like structure or a perforated tube. Thus, the connecting structures can be perforated tube-like structures or perforated tubes.

It is also possible that in the joint region, the first electrical conductor is in direct mechanical and thus in direct electrical contact with the second electrical conductor. The first electrical conductor can be connected directly to the second electrical conductor, and vice versa. For achieving a direct mechanical and electrical contact between the conductors, the first and second electrical conductors can be pressed against each other, soldered or welded together, glued together using a conductive glue or connected to each other by using connecting means like a screw system etc. It is possible for the first conductor and/or the second conductor to have tube-like structure/s, wherein the first conductor may be located in places inside the second conductor, or vice versa. The first conductor and/or the second conductor may have different or varying inner or outer diameters so that one conductor can be pressed against the other conductor to form a stable mechanical and/or electrical connection.

According to an embodiment of a module, it comprises a first module part, a second module part and a joint region. The first module part comprises a first electrical conductor, first foils and first isolating structures alternated with the first foils. The second module part comprises a second electrical conductor, second foils and second isolating structures alternated with the second foils. The joint region comprises a conductor connector, connecting structures and an insulation material. The first module part and the second module part are joined together in the joint region. The conductor connector electrically connects the first electrical conductor to the second electrical conductor. Each one of the connecting structures electrically connects one of first foils to one of the second foils. The joint region is filled with the insulation material for electrically isolating at least the conductor connector and the connecting structures from each other. Thus, the insulation material can isolate conductor connector from the connecting structures and at the same time can isolate the connecting structures from each other. For instance, the insulation material is configured to electrically isolate: between the conductor connector and the foils; between different foils; between different connecting structures; between the conductor connector and the connecting structures; and/or between the foils and connecting structures.

The conductor connector can be in mechanical contact with the first electrical conductor and/or the second electrical conductor. Thus, the conductor connector can mechanically connect and/or electrically connect the first electrical conductor to the second electrical conductor. The use of the conductor connector enhances the mechanical stability of an electrical connection between the first and second electrical conductors but can also be optional.

The first foils and the second foils can be made from the same or different materials. The first isolating structures and the second isolating structures can be made from the same or different materials. The first module part and the second module part can be two symmetric parts of the module. Using the conductor connector and/or the connecting structures being for instance perforated electrically conductive tubes, electrical and/or mechanical strength between the first module part and the second module part as well as a desired capacitive field grading and/or resistive field grading in the joint region can be ensured. Moreover, due to the perforated form of the connecting structures being for instance conductive tubes, the joint region can be filled with the insulation material in a convenient way, for instance after a secure mechanical and electrical connection between the first module part and the second module part has been established. Regions between the conductor connector and the conductive connecting structures or between the connecting structures can be impregnated with the insulation material, for instance with a curable or hardening insulation material. Furthermore, due to a concentric arrangement of the conductor connector, the connecting structures being for instance conductive tubes or tube-like structures, and the insulation material, the mechanical stability in the joint region can be enhanced.

According to a further embodiment of the module, the joint region further comprises conductive ring-like structures or conductive rings. For instance, each one of the conductive rings or ring-like structures is arranged on one of the first foils or on one of the second foils. The connecting structures can be electrically connected to the first foils and/or to the second foils via the conductive ring-like structures, wherein each one of the connecting structures is electrically connected to two different conductive ring-like structures. Each of the conductive ring-like structures can concentrically surround one of the first or second foils.

The ring-like structure can be a homogeneous ring or a disconnected ring. For instance, the ring-like structure can be formed by solid structures spaced apart around a circumference of the first or second foil. The ring-like structure can be perforated or made by wire/s, web/s, strands, net etc. For example, the ring-like structure is configured to allow a liquid flow in a lateral direction.

In the presence of the conductive ring-like structures, mechanical and electrical connections between the foils and the connecting structures are improved. Moreover, adjusting vertical thicknesses of the ring-like structures may help to lower the electric field in the joint region. For instance, different ring-like structures at different vertical levels within the joint region can have different thicknesses.

A vertical direction is understood to mean a direction which is directed perpendicular to a main extension direction of the module or of the module part. A lateral direction is understood to mean a direction which is parallel to the main extension direction of the module, for instance parallel to a main extension direction of the first electrical conductor and/or of the second electrical conductor. The vertical direction and the lateral direction are orthogonal to each other.

According to a further embodiment of the module, the first electrical conductor is a first conductor tube. The second electrical conductor can be a second conductor tube. For instance, the conductor connector has the form of a tube, but it is not limited thereto. The conductor connector can be arranged partially within the first conductor tube and partially within the second conductor tube, or vice versa. The latter case means that the first conductor tube and/or the second conductor tube can be arranged partially within the conductor connector. The conductor connector can have the form of a tube. It is possible for the conductor connector to have constant diameter or varying diameters. If the conductor connector has varying diameters along a lateral direction, the fastening of the first electrical conductor and/or of the second electrical conductor to the conductor connector can be simplified. It is also possible not to use the conductor connector. In this case, the first electrical conductor and the second electrical conductor can be mechanically and electrically connected to each other directly. It is possible for the first electrical conductor and/or the second electrical conductor have constant diameter or varying diameters.

According to a further embodiment of the module, within the joint region, the first foils and the first isolating structures form a staircase-like geometrical structure having lateral steps and vertical step faces, wherein the lateral steps are formed by surfaces of the first foils and the vertical step faces are formed at least in places by surfaces of the first isolating structures. Alternatively or in addition, within the joint region, the second foils and the second isolating structures can form a staircase-like geometrical structure having lateral steps and vertical step faces, wherein the lateral steps are formed by surfaces of the second foils and the vertical step faces are formed at least in places by surfaces of the second isolating structures.

According to a further embodiment of the module, the vertical step faces are formed by inclined or curved vertical surfaces of the first isolating structures and/or of the second isolating structures.

Having staircase-like geometrical structure/s in the joint region, stable and secure mechanical and electrical connections of the conductor connector, the conductive ring-like structures and/or the connecting structures to the electrical conductor or to the conductive foils can be realized in a simplified manner.

According to a further embodiment of the module, the joint region further comprising at least one isolating spacer, wherein the at least one isolating spacer is arranged between two adjacent connecting structures or between one connecting structure and the conductor connector or between one connecting structure and one of the first and second electrical conductors. The at least one isolating spacer can be made from a material which differs from the insulation material. The isolating spacer can be made from paper material.

The module can comprise a plurality of such isolating spacers in the joint region. The isolating spacers are arranged for instance between the connecting structures and/or between one connecting structure and the conductor connector.

Here in this disclosure, a tube can mean an empty cylinder, for instance without bottom and top surfaces. Thus, such a tube can comprise a cylinder wall surrounding a center line, along which the tube extends along a lateral direction. Thus, the tube can have a geometrical structure of a layer which is rolled up such that opposite edges of the layers are connected for forming an empty cylinder. The cylinder wall can be continuous or discontinuous or can have openings or can be perforated. It is also possible that along the lateral direction, the empty cylinder can have constant size or varying sizes. The module can have a concentric arrangement, wherein each of the foils, the isolating structures, the conductive ring-like structures and/or the spacers can have the form of a tube or of a tube-like structure.

According to a further embodiment of the module, the first electrical conductor is surrounded by the first isolating structures alternated with the first foils. The second electrical conductor can be surrounded by the second isolating structures alternated with the second foils.

According to a further embodiment of the module, the insulation material in the joint region is made up of a solid material. It is possible that the joint region is free of gaseous, viscous and/or fluid materials. In this case, the joint region can be a dry and gas-free joint region. Furthermore, it is also possible that the joint region comprises different kind of insulation materials, for instance different kinds of solid, gaseous, viscous and/or fluid materials. If a dry and gas-free joint region is preferred, the insulation material can be a curable insulation material. Instead of using a curable insulation material, other insulation material like hardening material, for instance thermoplastic or thermoset material can be used.

According to a further embodiment of the module, the insulation material in the joint region comprises a fluid, viscous or gaseous material. A fluid material can be oil. A viscous material can be gel. A gaseous material can be an insulating gas, which can be SF6 or different from SF6.

According to a further embodiment of the module, a number of the connecting structures is equal to a number of the first foils and/or to a number of the second foils. The first foils of the first module part and the second foils of the second module part can be pairwise connected to each other via the connecting structures. It is possible that the joint region comprises conductive ring-like structures arranged between the connecting structures and the foils. Such a conductive ring-like structure can be in direct mechanical and electrical contact with one of the foils and one of the connecting structures.

According to a further embodiment of the module, a number of the connecting structures is smaller than a number of the first foils and/or smaller than a number of the second foils. It is possible that some but not all of the first foils of the first module part and some but not all of the second foils of the second module part are pairwise connected to each other via the connecting structures or via the connecting structures and the conductive ring-like structures.

For instance, only some first foils are joined with some second foils, while the mechanical and electrical connection can be skipped for some pairs of the first and second foils. A ration of the number of the connecting structures to the number of the first foils or to the number of the second foils may be from 0.1 to 0.9, from 0.2 to 0.8, from 0.3 to 0.7 or from 0.4 to 0.6.

According to a further embodiment of the module, the module is an electric bushing, for instance high voltage wall bushing, for instance a high voltage direct current, HVDC, bushing, or any other type of bushing, e.g. transformer bushing. The module can also be a cable termination or an instrument transformer. The first module part and the second module part can be a first condenser core and a second condenser core, respectively.

According to a further embodiment of the module, the first isolating structures and/or the second isolating structures are resin impregnated paper, RIP, layers. Instead of RIP, other materials like RIS (resin impregnated synthetic), RIN (resin impregnated non-woven), OIP (oil impregnated paper), glass, thermoplastic, GIF (gas impregnated film), oil, or gas impregnated material can be used.

According to one embodiment of a method for producing a module, the method comprises a step of providing a first module part comprising a first electrical conductor, first foils and first isolating structures alternated with the first foils. The method further comprises a step of providing a second module part comprising a second electrical conductor, second foils and second isolating structures alternated with the second foils. A joint region is formed for joining together the first module part and the second module part, wherein the joint region comprises connecting structures and an insulation material. The forming the joint region comprises: electrically connecting the first electrical conductor to the second electrical conductor; applying the connecting structures, wherein each one of the connecting structures electrically connects one of first foils to one of the second foils; and filling the joint region with the insulation material for electrically isolating the connecting structures from each other. The insulation material can be used for electrically isolating at least the connecting structures from the first and second electrical conductors. The insulation material can also be used for electrically isolating some or all different conductive parts in the joint region from each other as mentioned above.

When forming the joint region, it is possible to add an evacuation step, for instance before the step of filling the joint region with the insulation material. The insulation material may be a gaseous or fluid material. Subsequently, a step of curing/hardening the fluid material may be performed for obtaining the insulation material in form of a solid material.

According to one embodiment of a method for producing a module, the method comprises providing a first module part comprising a first electrical conductor, first foils and first isolating structures alternated with the first foils. The method further comprises providing a second module part comprising a second electrical conductor, second foils and second isolating structures alternated with the second foils. Moreover, the method comprises a process of forming a joint region for joining together the first module part and the second module part, wherein the joint region comprises a conductor connector, connecting structures and an insulation material. The process of forming the joint region comprises electrically and mechanically connecting the first electrical conductor to the second electrical conductor via the conductor connector. This process further comprises applying or forming the connecting structures, wherein each one of the connecting structures electrically connects one of first foils to one of the second foils. The joint region is filled with the insulation material for electrically isolating at least the conductor connector and the connecting structures from each other. The insulation material can also be used for electrically isolating some or all different conductive parts in the joint region from each other as mentioned above.

According to further embodiments of the method, the module according to any embodiments described in this disclosure is produced.

The present disclosure comprises several aspects of a module and several aspects of a method for producing such a module on the basis of their embodiments and examples. Every feature described with respect to one of the aspects is also disclosed herein with respect to the other aspect, even if the respective feature is not explicitly mentioned in the context of the specific aspect. For example, the method described in this disclosure is directed to a method for producing the module described in this disclosure. Thus, features and advantages described in connection with the module can be used for the method, and vice versa.

While the disclosure is amenable to various modifications and alternative forms, specifics thereof are shown by way of example in the figures and will be described in detail. It should be understood, however, that the intention is not to limit the disclosure to the particular described embodiments and examples. On the contrary, the intention is to cover all modifications, equivalents, and alternatives falling within the scope of the disclosure defined by the appended claims.

The accompanying figures are included to provide a further understanding. In the figures, elements of the same structure and/or functionality may be assigned to the same reference signs. It is to be understood that the examples shown in the figures are illustrative representations and are not necessarily true to scale.
Figure 1A schematically shows one general concept of a module according to an example of the disclosure, wherein a first module part is connected to a second module part via a joint region.
Figures 1B basically shows the module according to the example shown in Figure 1A in sectional view.
Figures 2A, 2B, 3A, 3B, 4A and 4B show further examples of the module.
Figures 5A, 5B, 5C and 5D show some exemplary method steps of a method for producing a module having a joint region.
Figures 6 and 7 show further examples of the module in sectional views.
Figure 8A schematically shows a further general concept of a module according to another example of the disclosure, wherein the first electrical conductor and the second electrical conductor are directly connected to each other even without the use of a conductor connector.
Figures 8B basically shows the module according to the example shown in Figure 8A in sectional view.
Figures 9A, 9B and 9C show further examples of the module.

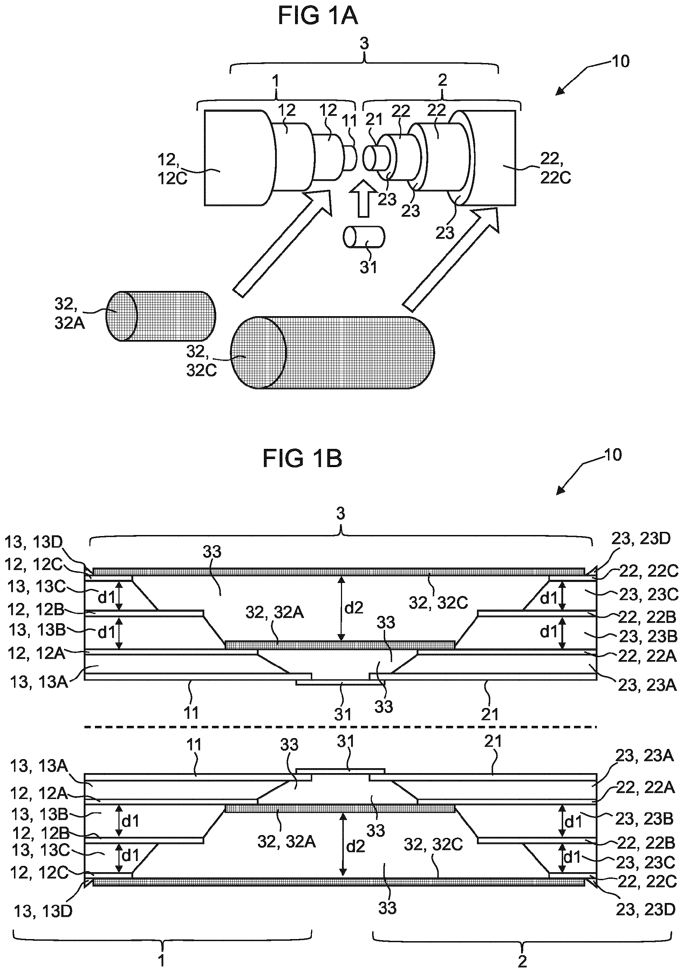

Figure 1A shows one general concept of a module 10 according to one exemplary embodiment. A sectional view of such a module 10 is show in Figure 1B.

The module 10 comprises a first module part 1, a second module part 2 and a joint region 3. Regarding the first module part 1 and the second module part 2, only regions adjoining the joint region 3 are shown. The first module part 1 and the second module part 2 can extend further to the left and to the right, respectively. The first module part 1 and the second module part 2 may have similar or identical geometrical sizes. The first module part 1 and the second module part 2 may have a lateral extension of several meters. It is possible that the module 10 has a symmetrical geometry.

The first module part 1 comprises a first electrical conductor 11, for instance a single first electrical conductor 11, a plurality of first foils 12 and a plurality first isolating structures 13. The first foils 12 and the first isolating structures 13 are arranged in an alternated manner. Thus, besides one innermost first isolating structure 13 and one outermost first isolating structure 13, any further first isolating structure 13 may be arranged between two adjacent first foils 12. Moreover, any first foil 12 may be arranged between two adjacent first isolating structures 13. The first isolating structures 13 and the first foils 12 are wrapped around the first electrical conductor 11 in an alternated manner.

The first electrical conductor 11 can be electrically isolated from an innermost first foil 12A by an innermost first isolating structure 13A. For instance, the first electrical conductor 11 is completely surrounded by the first foils 12 and the first isolating structures 13. Only in the joint region 3, the first electrical conductor 11 partially protrudes over the first foils 12 and/or the first isolating structures 13 for instance along a lateral direction. It is possible that none of the first foils 12 is in electrical contact with the first electrical conductor 11 or with any other one of the first foils 12.

The second module part 2 comprises a second electrical conductor 21, for instance a single second electrical conductor 21, a plurality of second foils 22 and a plurality second isolating structures 23. The second foils 22 and the second isolating structures 23 are arranged in an alternated manner. Thus, besides one innermost second isolating structure 23 and one outermost second isolating structure 23, any further second isolating structure 23 may be arranged between two adjacent second foils 22. Moreover, any second foil 22 may be arranged between two adjacent second isolating structures 23. The second isolating structures 23 and the second foils 22 are wrapped around the second electrical conductor 21 in an alternated manner.

The second electrical conductor 21 can be electrically isolated from an innermost second foil 22A by an innermost second isolating structure 23A. For instance, the second electrical conductor 21 is completely surrounded by the second foils 22 and the second isolating structures 23. Only in the joint region 3, the second electrical conductor 21 partially protrudes over the second foils 22 and/or the second isolating structures 23 for instance along a lateral direction. It is possible that none of the second foils 22 is in electrical contact with the second electrical conductor 21 or with any other one of the second foils 22.

In Figure 1B, as an example, three first foils 12A, 12B, 12C, four first isolating structures 13A, 13B, 13C, 13D as well as three second foils 22A, 22B, 22C and four second isolating structures 23A, 23B, 23C, 23D are shown. The first module part 1 and/or the second module part 2 can have another number of the first foils 12, the first isolating structures 13, the second foils 22 and/or the second isolating structures 23. Such a number can be from 3 to 150, 3 to 100, 3 to 50, 3 to 30, 3 to 20, 3 to 10 or from 5 to 150, 5 to 100, 5 to 50, 5 to 30, 5 to 20, 5 to 10 or from 10 to 20.

The first module part 1 and the second module part 2 are joined together in the joint region 3. The joint region 3 comprises a conductor connector 31, wherein the conductor connector 31 mechanically and electrically connects the first electrical conductor 11 to the second electrical conductor 21. The conductor connector 31A is formed from an electrically conductive material. A connection between the conductor connector 31 and the electrical conductor 11 and/or between the conductor connector 31 and the second electrical conductor 21 can be formed by e.g. brazing, welding, friction welding, stir welding or different contact like screw contacts or spring loaded contacts, or gluing using a conductive glue.

It is possible that the conductor connector 31 has the form of a tube. The first electrical conductor 11 and/or the second electrical conductor 21 can be located partially inside the conductor connector 31. It is also possible that the first electrical conductor 11 is a first conductor tube 11 and/or that the second electrical conductor 21 is a second conductor tube 21. In this case, the conductor connector 31 can be arranged partially within the first conductor tube 11 and/or partially within the second conductor tube 21 as shown in Figure 1B. The conductor connector 31 can be arranged partially outside the first conductor tube 11 and the second conductor tube 21. It is also possible for the first conductor tube 11 and the second conductor tube 21 to be arranged partially inside the conductor connector 31 being a tube.

Along a lateral direction, the conductor connector 31 can have a constant diameter. It is also possible for the conductor connector 31 to have a varying inner or outer diameter. A conductor connector 31 with varying sizes along a lateral direction can simplify the realization of a stable mechanical and electrical connection between the conductor connector 31 and the first electrical conductor 11 as well as between the conductor connector 31 and the second electrical conductor 21.

For example, at its both ends, the conductor connector 31 has smaller size than inner diameters of the first electrical conductor 11 and the second electrical conductor 21. In the middle between both ends of the conductor connector 31, however, the conductor connector 31 can have larger size than the inner diameters of the first electrical conductor 11 and the second electrical conductor 21.

As an alternative, outer surface of the conductor connector 31 can have the form of a hyperboloid. In this case, at both ends, the conductor connector 31 being a tube can have an inner diameter which is larger than outer diameters of the first electrical conductor 11 and of the second electrical conductor 21. In the middle, however, the conductor connector 31 can have an inner diameter which is smaller than the outer diameters of the first electrical conductor 11 and of the second electrical conductor 21. Thus, the first electrical conductor 11 and of the second electrical conductor 21 can be located partially within the conductor connector 31.

As shown in Figures 1A and 1B, the joint region 3 can comprise at least two or a plurality of connecting structures 32. The connecting structure 32 is formed from an electrically conductive material. The connecting structure 32 can be an electrically conductive net which is rolled up to form an empty cylinder. Each one of the connecting structures 32 can electrically connect one of first foils 12 to one of the second foils 22. As shown in Figure 1B, the connecting structure 32A electrically connects one first foil 12A to one second foil 22A, wherein the connecting structure 32C electrically connects one first foil 12C to one second foil 22C. For example, the connecting structure 32 is in direct mechanical and electrical contact with one first foil 12 and one corresponding second foil 22. As indicated in Figures 1A and 1B, each of the first foils 12, the second foils 22, the first isolating structures 13 and/or of the second isolating structures 23 can have the form of a tube.

The joint region 3 is filled with an insulation material 33 for electrically isolating the conductor connector 31 and the connecting structures 32 from each other. The insulation material 33 can be made up of a solid material. In this case, the joint region 3 can be free of a gaseous, viscous and/or fluid material. It is, however, possible that the insulation material 33 in the joint region 3 comprises a fluid, viscous or gaseous material.

As shown in Figure 1B, it is possible that a first foil 12B is neither mechanically nor electrically connected to a corresponding second foil 22B. A vertical distance d2 between two adjacent connecting structures 32A and 32C can be larger than a vertical distance d1 between two adjacent first foils 12A and 12B, between two adjacent first foils 12B and 12C, between two adjacent second foils 22A and 22B or between two adjacent second foils 22B and 22C.

Thus, Figures 1A and 1B show an example of a module 10, wherein a number of the connecting structures 32 is smaller than a number of the first foils 12 and/or smaller than a number of the second foils 22. In this case, some but not all of the first foils 12 of the first module part 1 and some but not all of the second foils 22 of the second module part 2 are pairwise connected to each other via the connecting structures 32.

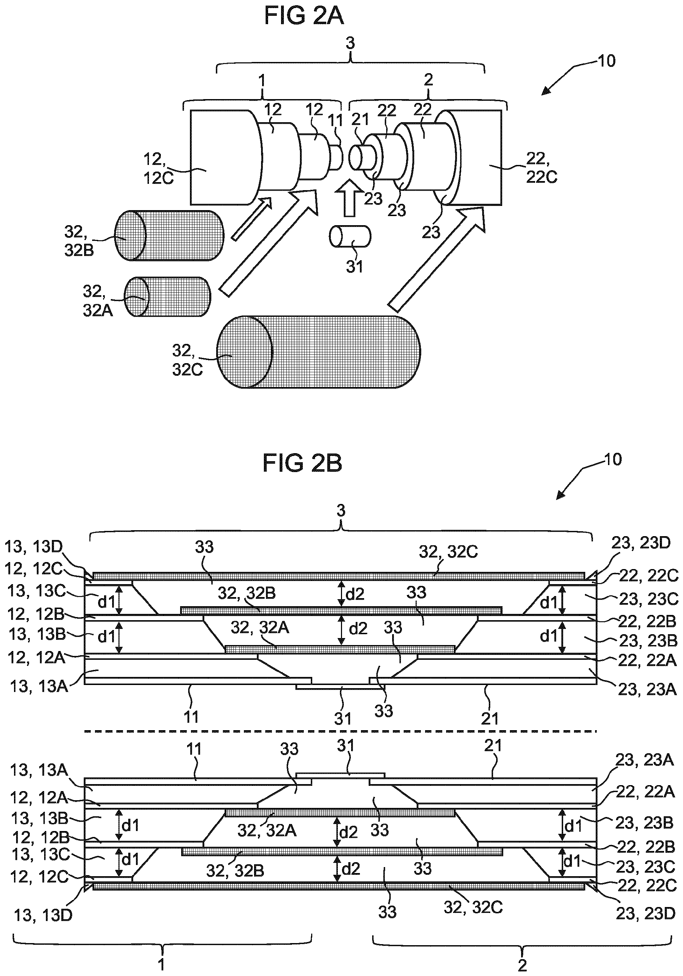

The module 10 shown in Figures 2A and 2B is basically identical to the module 10 shown in Figures 1A and 1B. In deviation from Figures 1A and 1B, the module 10 shown in Figures 2A and 2B comprises a number of the connecting structures 32 which is equal to a number of the first foils 12 and/or to a number of the second foils 22. In this case, all first foils 12 of the first module part 1 can be pairwise connected to all second foils 22 of the second module part 2 via the connecting structures 32. Thus, compared to Figure 1B, as shown in Figure 2B, the joint region 3 also comprises a connecting structure 32B which mechanically and electrically connects the first foil 12B to the corresponding second foil 22B. In this case, within the production tolerances, the vertical distance d2 between two adjacent connecting structures 32 can be equal to the vertical distance d1 between two adjacent the first foils 12 or between two adjacent the second foils 22.

In any cases, within the production tolerances, walls of the first foils 12 and/or walls of the second foils 22 can have equal vertical thicknesses. It is possible that walls of the connecting structures 32 have equal vertical thicknesses. Furthermore, within the production tolerances, walls of the first isolating structures 13 and/or walls of the second isolating structures 23 can have equal vertical thicknesses.

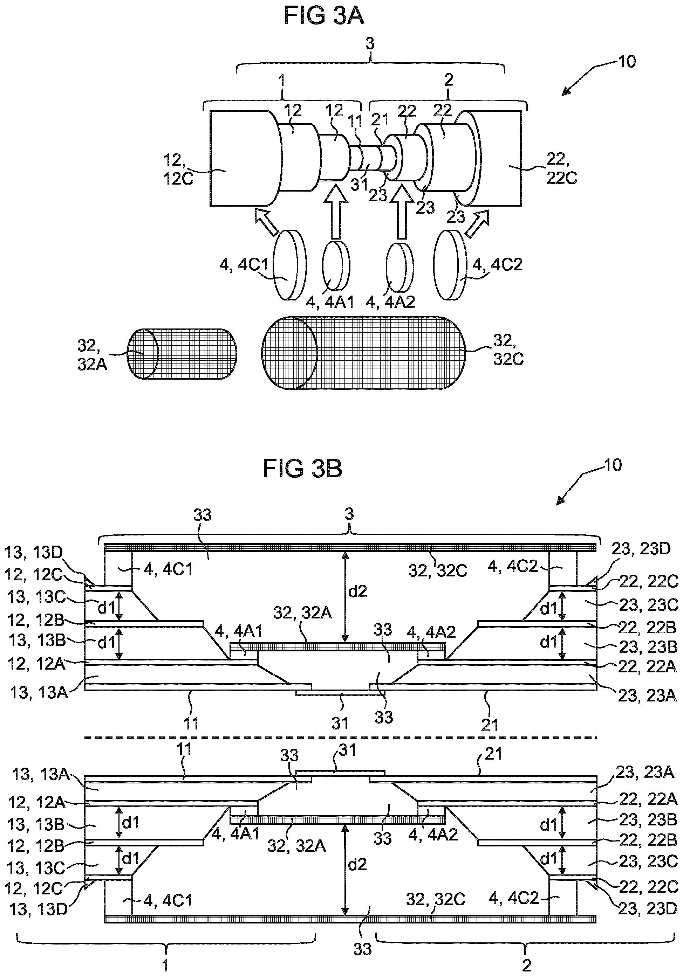

The module 10 shown in Figures 3A and 3B is basically identical to the module 10 shown in Figures 1A and 1B. In deviation from Figures 1A and 1B, in the joint region 3, the module 10 shown in Figures 3A and 3B comprises a plurality of conductive ring-like structures 4, 4A1, 4A2, 4C1 and 4C2. The conductive ring-like structure 4 is arranged between one connecting structure 32 and one first foil 12 or between one connecting structure 32 and one second foil 22. For example, the conductive ring-like structure 4 is in direct mechanical and electrical contact with one connecting structure 32 and one first foil 12 or one second foil 22.

As shown in Figure 3B, each one of the conductive ring-like structures 4 is arranged on one of the first foils 12 or on one of the second foils 22. The conductive ring-like structure 4 can surround one first foil 12 or one second foil 22. One connecting structure 32 can surround one pair of the conductive ring-like structures 4. Each of the connecting structures 32 can be electrically connected to one first foil 12 and one second foil 22 via one pair of the conductive ring-like structures 4, for example via the ring-like structures 4A1 and 4A2 or via the ring-like structures 4C1 and 4C2. Here, each one of the connecting structures 4 can be mechanically and electrically connected to two different conductive ring-like structures 4, wherein one of the ring-like structures 4 is electrically connected to one first foil 12 and another one of the ring-like structures 4 is electrically connected to one second foil 22.

As shown in Figures 3A and 3B, the conductive ring-like structures 4 on the same vertical level of the foils 12 and 22 may have the same size, diameter and/or the same thickness. The conductive ring-like structures 4 on different vertical levels of the foils 12 and 22 may have the different sizes, diameters and/or different thicknesses.

It is possible that some of the first foils 12 and some of the second foils 22 are not mechanically or electrically connected to any of the conductive ring-like structures 4. In Figure 3B, the first foil 12B is not connected to the second foil 22B, wherein the first foil 12B and the second foil 22B are not connected to any conductive ring-like structure 4.

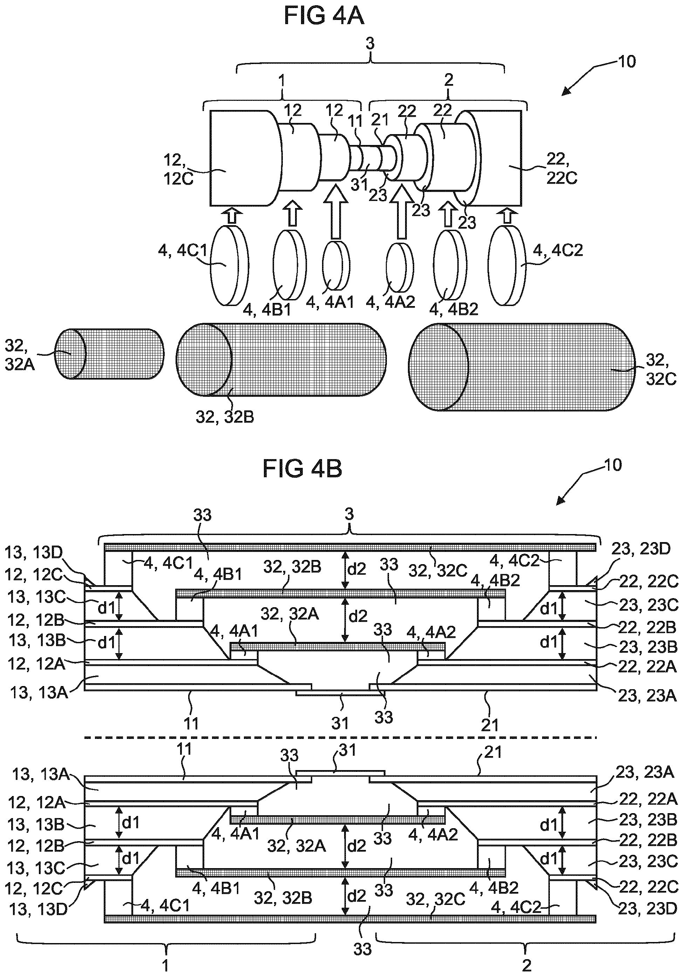

The module 10 shown in Figures 4A and 4B is basically identical to the module 10 shown in Figures 3A and 3B. In deviation from Figures 3A and 3B, it is possible that all first foils 12 and all second foils 22 in the joint region 3 are connected to the conductive ring-like structures 4 and the connecting structures 32. In Figure 4B, also the first foil 12B is electrically connected to the second foil 22B via the conductive ring-like structures 4B1, 4B2 and the connecting structure 32B. Thus, up to the presence of the conductive ring-like structures 4 between the connecting structures 32 and the first foils 12 or second foils 22, the module 10 shown in Figures 4A and 4B is identical to the module 10 shown in Figures 2A and 2B.

As shown in Figures 3B and 4B, a vertical distance d2 between two adjacent connecting structures 32 can be larger than a vertical distance d1 between two adjacent first foils 12 or between two adjacent second foils 22. This is due to different thicknesses of different conductive ring-like structures 4 on different vertical levels or due to the absence of some conductive ring-like structures 4.

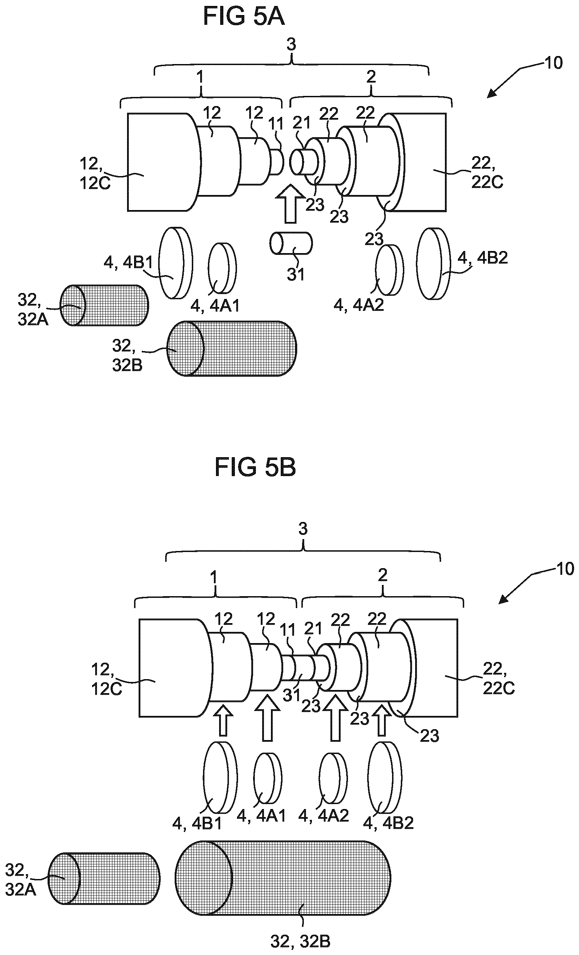

As shown in Figures 1A to 4B and also in Figures 5A to 7 and 9, within the joint region 3, the first foils 12 and the first isolating structures 13 can form a staircase-like geometrical structure, for instance a circumferential staircase-like geometrical structure. Such geometrical structure has lateral steps and vertical step faces, wherein the lateral steps are formed by surfaces of the first foils 12 and the vertical step faces are formed by surfaces of the first isolating structures 13. Also within the joint region 3, the second foils 22 and the second isolating structures 23 can form a staircase-like geometrical structure, for instance a circumferential staircase-like geometrical structure, having lateral steps and vertical step faces, wherein the lateral steps are formed by surfaces of the second foils 22 and the vertical step faces are formed by surfaces of the second isolating structures 23.

In virtue of such staircase-like geometrical structure/s, the conductive ring-like structures 4 and/or the connecting structures 32 can be arranged on and fixed to the lateral steps in a secure and simplified manner. The vertical step faces can be formed by inclined or curved vertical surfaces of the first isolating structures 13 and/or of the second isolating structures 23. Hence along a vertical direction from the conductor connector 31 towards outer connecting structures 32, the joint region 3 has surfaces having the form of a terrace-like hyperboloid. In sectional view, the joint region 3 can have a V-like or parabola-like geometry. This simplifies the process of filling the joint region 3 with the insulation material 33.

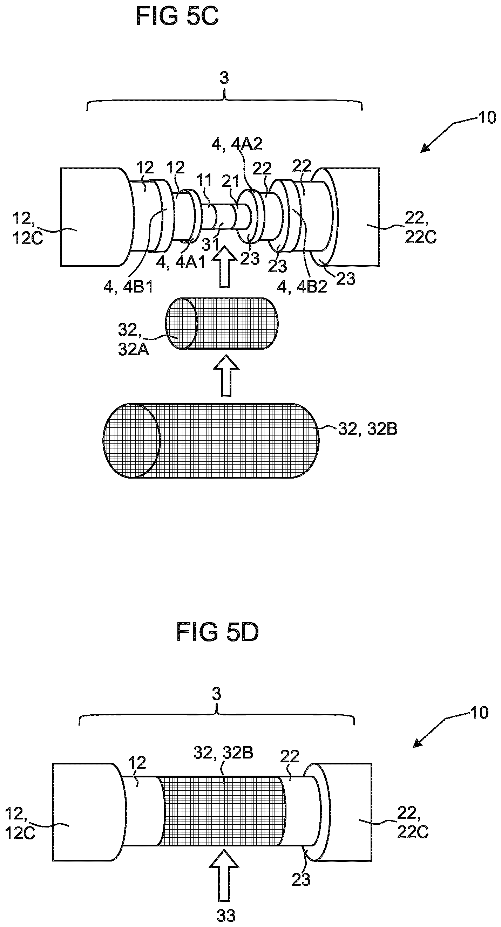

Figures 5A, 5B, 5C and 5D show some method steps of a method for producing a module 10 having a joint region 3.

According to Figure 5A, a first module part 1 and a second module part 2 are provided. The first module part 1 and the second module part 2 are joined together at the joint region 3 using the conductor connector 31 and the connecting structures 32. It is also possible to additionally use the conductive ring-like structures 4.

The first module part 1 and the second module part 2 can be two separate resin impregnated paper, RIP, condenser cores which are manufactured with one side specially designed for joining purposes. Instead of RIP, other materials like RIS (resin impregnated synthetic), RIN (resin impregnated non-woven), OIP (oil impregnated paper), glass, thermoplastic, GIF (gas impregnated film), oil, or gas impregnated material can be used.

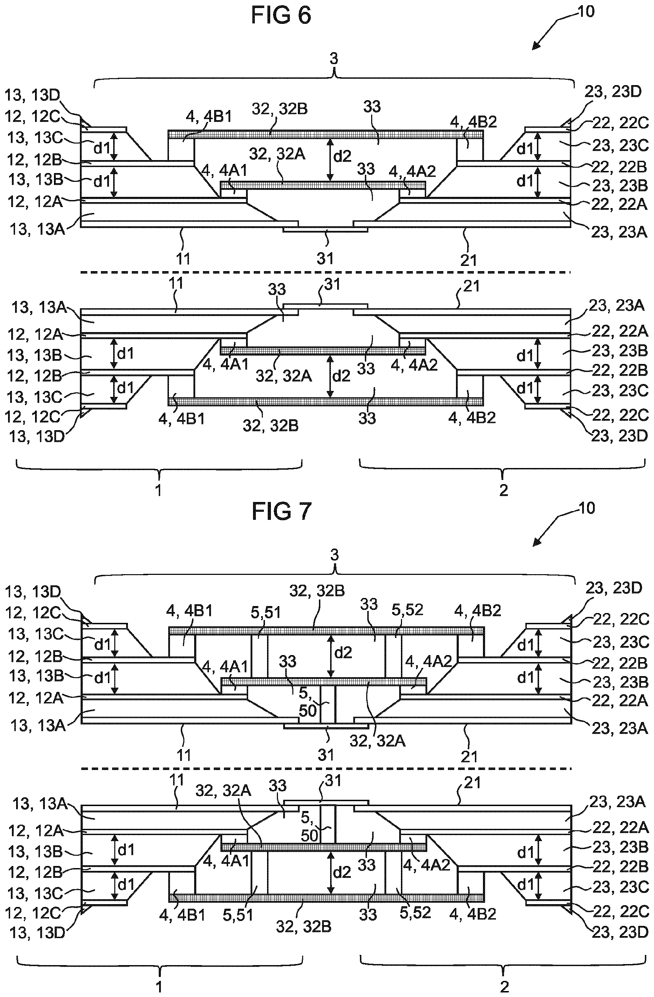

According to Figure 5B, the first electrical conductor 11 is electrically and mechanically connected to the second electrical conductor 21 via the conductor connector 31. The first electrical conductor 11, the second electrical conductor 21 and/or the conductor connector 31 can have the form of a tube. The conductor connector 31 can be located partially inside and partially outside the first electrical conductor 11 and the second electrical conductor 21, or vice versa. The mechanical connection can be carried out by a brazing, welding, friction welding, stir welding process or by different types of contacts like screw contacts or spring loaded contacts, or by gluing using a conductive glue. It is possible to add isolating spacer/s 5 in the joint region 3 around the conductor connector 31, the first electrical conductor 11 and/or the second electrical conductor 21. Such an isolating spacer 5 or 50 is shown schematically in Figure 7.

According to Figure 5C, conductive ring-like structures 4 can be fastened at the foil edges. The thicknesses of the ring-like structures 4 may help to lower the field in the joint region 3.

As shown in Figure 5D, the conductive connecting structures 32 or nets forming the conductive connecting structures 32 are fastened between the conductive rings 4 or ring-like structures 4 to pairwise connect the first foils 12 and the second foils 22 of the module parts 1 and 2, for instance of the two resin impregnated paper, RIP, bodies. In the absence of the conductive ring-like structures 4, the conductive connecting structures 32 may be fastened to the foil edges directly. Depending on different designs, all foils 12 and 22 or only some of the foils 12 and 22 are mechanically and electrically connected.

It is desirable that the conductive connecting structures 32 or the nets are formed to be sufficiently mechanically stable to keep their cylindrical shape during possible evacuation and subsequent filling with the insulation material 33. The insulation material 33 may be in liquid or viscous form and can be cured subsequently. It is possible to add isolating spacer/s 5 into the joint region 3 around the conductive connecting structures 32 or between the conductive connecting structures 32. Such isolating spacers 5, 51 and 52 are shown schematically in Figure 7.

As shown in Figure 5D, the joint region 3 is filled with the insulation material 33. The insulation material 33 may be a curable liquid insulating material like e.g. epoxy, gel, or liquid rubber. Prior to filling, an evacuation process may be carried out. Moreover, surfaces of the isolating structures 13 and 23, for instance, resin impregnated paper, RIP surfaces, may be activated. For preventing possible shrinkage during curing, a heat expanding filler might be added to the insulation material 33.

It is possible to mount common flange/s on the first module part 1 and/or on the second module part 2, for instance on the RIP condenser cores, to cover the joint region 3 and provide mechanical support. For instance, flanges are arranged on both sides of the joint region 3 so that it can be avoided that the joint region 3 being a connecting zone is exposed to high mechanical stresses. Thus, it is not necessary for the joint region 3 to take the complete mechanical strength, and the module parts 1 and 2 can be connected firmly by a flange connection.

In case that the insulation material 33 in the joint region 3 is made up of a solid material, for instance of a curable insulating material, the joint region 3 is a dry and gas-free joint region 3. For instance, the joint region 3 is free of a SF6 gas. Using gas-free solutions can avoid issues with gas monitoring.

The dry and gas-free solution can help in the development of designing more effective high voltage modules, for example, dry and gas-free high voltage wall bushings which can be based on resin impregnated paper, RIP, technology. These modules or bushings can comprise a RIP condenser core inside a fiber-reinforced epoxy insulator tube with silicone sheds on its outside. The space between the condenser core and insulator tube can be filled with gel. A length of the RIP condenser core can be several meters to enable the high voltage level.

This disclosure provides a module 10 which is formed from two module parts 1 and 2 joined together in a joint region 3. Thus, it is suggested to form the module 10, for instance the condenser core, from two separate module parts 1 and 2, for instance from two shorter RIP bodies, that are joined together to achieve the desired total length. One main challenge with such solution is the dielectric strength of the joint region 3 between the module parts 1 and 2 or RIP bodies. This challenge may be solved for instance by using a dry and gas-free solution for the joint region 3. In particular, for a more environmentally friendly solution, the joint region 3 can be free of SF6 gas.

Here, the module 10 can be a high voltage module, for instance an electric high voltage wall bushing. The first module part 1 and the second module part 2 can be a first condenser core and a second condenser core, respectively. Thus, such a module 10 can be a high voltage wall bushing, for instance a high voltage direct current, HVDC, wall bushing, which can be based on two separate RIP condenser cores that are joined together. The foils 12 and 22 of the two condenser cores can be pairwise electrically connected. The insulation of the joint region 3 can be made up of an insulation material 33, for instance of a solid material resulting in a both dry, for instance no oil, and gas-free design. As alternatives, however, it is also possible for the insulation material 33 in the joint region 3 to comprise a fluid, viscous or gaseous insulation material.

Figure 6 shows a cross section of the module 10 at the joint region 3. Such a module 10 can be produced by a method described in Figures 5A to 5D. Due to the presence of the conductive ring-like structures 4 with different thicknesses at different vertical levels, the distance d2 between adjacent connecting structures 32 in joint region 3 is larger than the distance d1 between adjacent foils 12 or 22 in the first module part 1 and in the second module part 2, for instance in the RIP bodies.

The module 10 shown in Figure 6 is basically identical to the module 10 shown in Figure 4B. In deviation from Figure 4B, the module 10 shown in Figure 6 does not comprise the outer conductive ring-like structures 4C1 and 4C2 and the outer connecting structure 32C.

The module 10 shown in Figure 7 is basically identical to the module 10 shown in Figure 6. In deviation from Figure 6, however, the joint region 3 comprises at least one isolating spacer 5 or 50 arranged between one connecting structure 32 and the conductor connector 31. Such spacer/s 5 or 50 can be arranged on the first electrical conductor 11 and/or on the second electrical conductor 21. The joint region 3 further comprises additional spacers 5, 51 and 52 arranged between two adjacent connecting structures 32. It is possible that the material of the spacer/s 5 differs from the insulation material 33. The spacers 5 are used to keep the sufficient distances from one tube to another tube and thus contribute to the mechanical stability of the joint region 3 and thus of the module 10.

As shown in Figure 7, the isolating spacer 5, 50, 51 or 52 only fills part of a lateral width of the joint region 3. In addition to or in deviation from Figure 7, it is possible that the isolating spacer 5, 50, 51 or 52 fills at least 20 %, 30 %, 50 %, 70 %, 80 % of the lateral width of the joint region 3 or even the full lateral width of the joint region 3. For RIP, the isolating spacer 5, 50, 51 or 52 can be made of paper, e.g. several paper layers on top of each other.

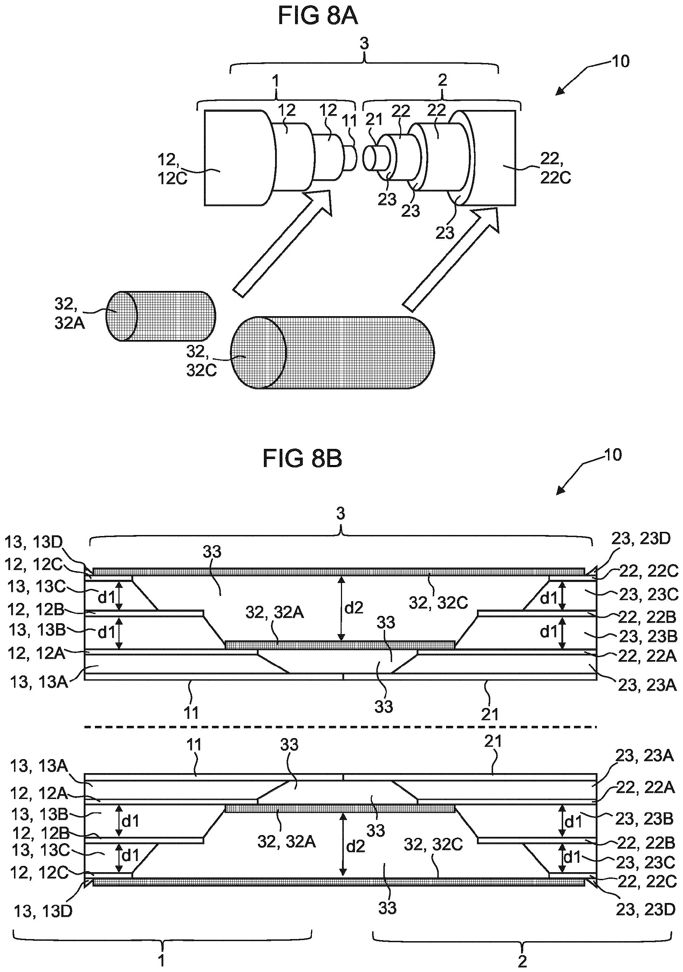

The examples of a module 10 shown in Figures 8A and 8B are basically identical to the example of the module 10 shown in Figures 1A and 1B. In deviation from Figures 1A and 1B, it is possible for the first electrical conductor 11 to be in direct mechanical and thus in direct electrical contact with the second electrical conductor 21. Thus, for forming the joint region 3, it is also possible not to use the conductor connector 31. Thus, the examples described in Figures 1A to 7 can be void of such a conductor connector 31. A direct connection between the first electrical conductor 11 and the second electrical conductor 21 can be formed by e.g. brazing, welding, friction welding, stir welding or different contact like screw contacts or spring loaded contacts or by gluing using a conductive glue. Thus, it is also possible that the first and second electrical conductors 11 and 21 are be pressed against each other.

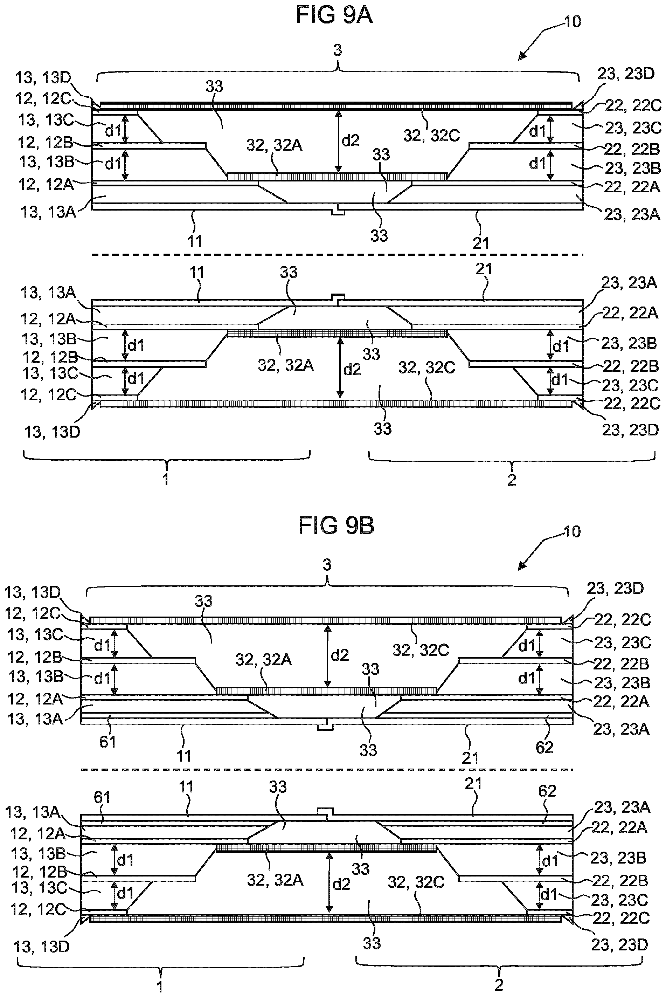

The first conductor and/or the second conductor to have tube-like structure/s, wherein the first conductor 11 may be located in places inside the second conductor 21, or vice versa. The first conductor 11 and/or the second conductor 21 may have different or varying inner or outer diameters so that one conductor can be pressed against the other conductor to form a stable mechanical and/or electrical connection. The latter is shown for instance in Figures 9A and 9B describing a module 10 which is basically identical to the module 10 shown in Figure 8B.

In deviation from Figure 8B, according to Figure 9A, the first conductor 11 is located in places inside the second conductor 21. In particular, in places at the joint region 3, the first conductor 11 has a smaller diameter than a diameter of the second conductor 21. Thus, at the joint region 3, part of the first conductor 11 is located inside the second conductor 21. For example, in places at the joint region 3, an outer diameter of the first conductor 11 is smaller than or equal to an inner diameter of the second conductor 21.

In deviation from Figure 8B, according to Figure 9B, the second conductor 21 is located in places inside the first conductor 11. In particular, in places at the joint region 3, the second conductor 21 can have a smaller diameter than a diameter of the first conductor 11. Thus, at the joint region 3, part of the second conductor 21 is located inside the first conductor 11. For example, in places at the joint region 3, an outer diameter of the second conductor 21 is smaller than or equal to an inner diameter of the first conductor 11.

As further deviation from Figure 8B, according to Figure 9B, a first cork layer 61 can be arranged between the first conductor 11 and the first isolating structure 13A. It is also possible to arrange a second cork layer 62 between the second conductor 21 and the second isolating structure 23A. The cork layer between the conductor 11/21 and the first isolating structure 13A/23A has the purpose to absorb mechanical stresses between the conductor 11/21 and all the isolating structures 13A/23A, 13B/23B,... including the insulation material 33. For instance, the cork layer/s 61/62 is/are configured to absorb mechanical stresses for instance when the insulation material 33 is deformed, for instance shrinks, during a curing process or during operation of the module 10. Such cork layer/s 61/62 can be also present in any of the examples of the module described in Figures 1 to 9A.

For example, the cork layer/s 61/62 is/are configured to compensate different thermal expansions of the conductor/s 11/21 and of the insulation material 33 (e.g. epoxy) and/or of the isolating structures, for instance of all the isolating structures 13A/23A, 13B/23B,.... It is possible that the cork layer/s 61/62 is/are placed solely at interfaces of the conductor/s 11/21, the isolating structures 13A/23A and/or of the insulation material 33. The cork layer/s 61/62 can be formed already in the manufacturing of the separate module parts 1 and 2.

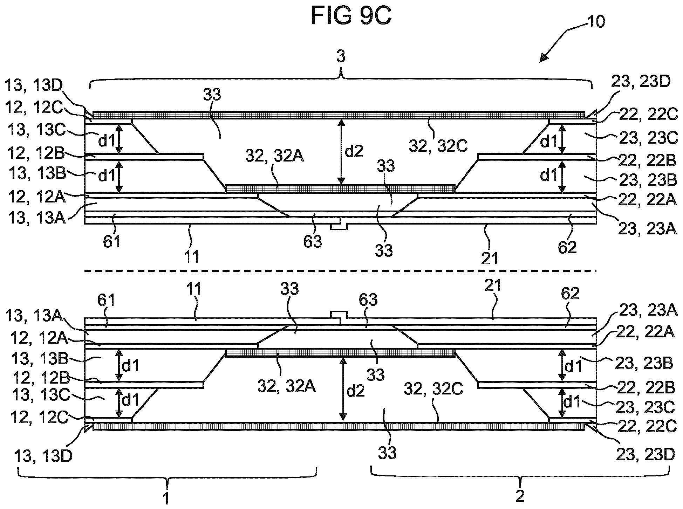

It is also possible, however, to place further cork layer/s 63 on surfaces of the conductor/s 11/21 and/or of the conductor connector 31 in joint region 3. This is shown for instance in Figure 9C. Here, a further cork layer 63 is located in the joint region 3, for instance, only in the joint region 3. The further cork layer 63 can adjoin the cork layer 61 and/or the cork layer 62. The further cork layer 63 is located for instance between the insulation material 33 and the conductor/s 11/21. The further cork layer 63 can be in direct contact with the insulation material 33, the conductor/s 11/21 and/or the cork layer 61/62. It is also possible that only the further cork layer 63 in the joint region 3 is present, i.e. also in the case without the cork layer 61 and/or the cork layer 62. Such cork layer 61, 62 and/or 63 can be present in any of Figures 1A to 9A.

Furthermore, in all Figures, additional mechanical stability for the module 10, in particular in the joint region 3, can be provided by using flange connection/s between the two module parts 1 and 2. For example, common flange/s may be used to cover the joint region 3. The flanges can be arranged on both sides of the joint region 3 so that it can be avoided that the joint region 3 is exposed to high mechanical stresses.

The embodiments shown in the Figures as stated represent exemplary embodiments of a module and a method for producing such a module; therefore, they do not constitute a complete list of all embodiments according to the improved arrangement of the module and the method. Actual arrangements of the module and of the method may vary from the exemplary embodiments described above.

### Reference Signs

- 10: module

- 1: first module part
- 11: first electrical conductor

- 12: first foil
- 12A: first foil
- 12B: first foil
- 12C: first foil

- 13: first isolating structure
- 13A: first isolating structure
- 13B: first isolating structure
- 13C: first isolating structure
- 13D: first isolating structure

- 2: second module part
- 21: second electrical conductor

- 22: second foil
- 22A: second foil
- 22B: second foil
- 22C: second foil

- 23: second isolating structure
- 23A: second isolating structure
- 23B: second isolating structure
- 23C: second isolating structure
- 23D: second isolating structure

- 3: joint region
- 31: conductor connector

- 32: connecting structure
- 32A: connecting structure
- 32B: connecting structure
- 32C: connecting structure

- 33: insulation material

- 4: conductive ring-like structure
- 4A1: conductive ring-like structure
- 4A2: conductive ring-like structure
- 4B1: conductive ring-like structure
- 4B2: conductive ring-like structure
- 4C1: conductive ring-like structure
- 4C2: conductive ring-like structure

- 5: isolating spacer
- 50: isolating spacer
- 51: isolating spacer
- 52: isolating spacer

- 61: first cork layer
- 62: second cork layer
- 63: cork layer/ further cork layer

- d1: distance between two adjacent first/second foils
- d2: distance between two adjacent connecting structures

## Claims

1. A module (10) comprising:
- a first module part (1) comprising a first electrical conductor (11), first foils (12) and first isolating structures (13) alternated with the first foils (12);
- a second module part (2) comprising a second electrical conductor (21), second foils (22) and second isolating structures (23) alternated with the second foils (22); and
- a joint region (3) comprising connecting structures (32) and an insulation material (33),
wherein
- the first module part (1) and the second module part (2) are joined together in the joint region (3), the first electrical conductor (11) being electrically connected to the second electrical conductor (21),
- each one of the connecting structures (32) electrically connects one of first foils (12) to one of the second foils (12), and
- the joint region (3) is filled with the insulation material (33) for electrically isolating at least the connecting structures (32) from each other.

2. The module (10) according to claim 1, wherein
- the joint region (3) further comprises conductive ring-like structures (4),
- each one of the conductive ring-like structures (4) is arranged on one of the first foils (12) or on one of the second foils (22), and
- the connecting structures (32) are electrically connected to the first foils (12) and/or to the second foils (12) via the conductive ring-like structures (4), each one of the connecting structures (4) being electrically connected to two different conductive ring-like structures (32).

3. The module (10) according to claim 1, wherein the joint region (3) further comprises a conductor connector (31), and wherein the first electrical conductor (11) is electrically connected to the second electrical conductor (21) via the conductor connector (31).

4. The module (10) according to claim 3, wherein
- the first electrical conductor (11) is a first conductor tube (11),
- the second electrical conductor (21) is a second conductor tube (21), and
- the conductor connector (31) is arranged partially within the first conductor tube (11) and partially within the second conductor tube (21), or vice versa.

5. The module (10) according to any the previous claims, wherein the first electrical conductor (11) is in direct mechanical and thus in direct electrical contact with the second electrical conductor (21).

6. The module (10) according to one of the previous claims, wherein
- within the joint region (3), the first foils (12) and the first isolating structures (13) form a staircase-like geometrical structure having lateral steps and vertical step faces, the lateral steps being formed by surfaces of the first foils (12) and the vertical step faces being formed by surfaces of the first isolating structures (13), and/or
- within the joint region (3), the second foils (22) and the second isolating structures (23) form a staircase-like geometrical structure having lateral steps and vertical step faces, the lateral steps being formed by surfaces of the second foils (22) and the vertical step faces being formed by surfaces of the second isolating structures (23) .

7. The module (10) according to the previous claim, wherein the vertical step faces are formed by inclined or curved vertical surfaces of the first isolating structures (13) and/or of the second isolating structures (23).

8. The module (10) according to one of the previous claims, the joint region (3) further comprising at least one isolating spacer (5), wherein
- the at least one isolating spacer (5) is arranged between two adjacent connecting structures (32) or between one connecting structure (32) and the conductor connector (31) or between one connecting structure (32) and one of the first and second electrical conductors (11, 21), and
- material of the at least one spacer (5) differs from the insulation material (33).

9. The module (10) according to one of the previous claims, wherein the insulation material (33) in the joint region (3) is made up of a solid material.

10. The module (10) according to one of claims 1 to 8, wherein the insulation material (33) in the joint region (3) comprises a fluid, viscous or gaseous material.

11. The module (10) according to one of the previous claims, wherein
- a number of the connecting structures (32) is equal to a number of the first foils (12) and/or to a number of the second foils (22), and
- the first foils (12) of the first module part (1) and the second foils (22) of the second module part (2) are pairwise connected to each other via the connecting structures (32).

12. The module (10) according to one of claims 1 to 10, wherein
- a number of the connecting structures (32) is smaller than a number of the first foils (12) and/or smaller than a number of the second foils (22), and
- some but not all of the first foils (12) of the first module part (1) and some but not all of the second foils (22) of the second module part (2) are pairwise connected to each other via the connecting structures (32).

13. The module (10) according to one of the previous claims, wherein the module (10) is an electric bushing, cable termination or an instrument transformer.

14. A method for producing a module (10) comprising:
- providing a first module part (1) comprising a first electrical conductor (11), first foils (12) and first isolating structures (13) alternated with the first foils (12) ;
- providing a second module part (2) comprising a second electrical conductor (21), second foils (22) and second isolating structures (23) alternated with the second foils (22); and
- forming a joint region (3) for joining together the first module part (1) and the second module part (2), the joint region (3) comprising connecting structures (32) and an insulation material (33),
wherein the forming the joint region (3) comprises:
- electrically connecting the first electrical conductor (11) to the second electrical conductor (21);
- applying the connecting structures (32), each one of the connecting structures (32) electrically connecting one of first foils (12) to one of the second foils (12); and
- filling the joint region (3) with the insulation material (33) for electrically isolating at least the connecting structures (32) from each other.

15. The method of claim 14 for producing the module (10) of any of claims 2 to 13.
